# EUROPEAN PATENT APPLICATION

(11) **EP 1 760 437 A1**
(43) Date of publication of application: **07.03.2007**
(21) Application number: 05019286.3
(22) Date of filing: 06.09.2005
(51) Int. Cl.: G01F 15/14

(54) **A method for manufacturing detector devices**

(71) Applicant: Sensirion AG, 8712 Stäfa (CH)
(72) Inventor: Mayer, Felix, 8712 Stäfa (CH); Kleinlogel, Christoph Martin, 8049 Zürich (CH)
(74) Representative: Blum, Rudolf Emil

(57) **Abstract**

A detector device has a housing body (2) manufactured by molding. Circuit paths (10) are arranged on housing body (2), and a semiconductor chip (8) is electrically connected to the same. A sensor (9) on semiconductor chip (8) is arranged at an opening (7) communicating with a flow channel (3) for measuring the flow of a liquid therein. Housing body (2) has a projecting tongue (13), which forms the male part of a plug for connecting the device to an external system.

## Description

The present invention relates to a method for manufacturing detector devices, in particular flow detector devices.

A typical type of such detectors generally comprises a housing body receiving a chip. The chip comprises an integrated sensor, such as a flow sensor.

To manufacture such detectors, the housing body is produced e.g. using molding techniques, and the chip is then inserted therein and affixed and connected by suitable means.

The problem to be solved by the present invention is to provide a more cost effective method for manufacturing this type of detector devices. This problem is solved by the methods according to the independent claims.

In a first aspect of the invention, the method relates to manufacturing a flow detector device. According to this method, a housing body with electric circuit paths is manufactured, e.g. using MID technologies. In a next step, the chip comprising the integrated flow sensor is mounted to the housing body and electrically connected to the circuit paths.

In a second aspect of the invention, the method relates to manufacturing detector devices which again comprise a chip with integrated sensor. In a first step, the chip is electrically connected to circuit paths arranged on an electrically insulating substrate. In a second step, the housing body is manufactured by casting at least part of the chip and substrate in a hardening material.

Both these methods allow to use low cost manufacturing techniques for producing sensors.

Further preferred embodiments and advantages are disclosed in the dependent claims as well as the following description, which makes reference to the enclosed figures:
Fig. 1 is a top view of a first embodiment of a flow detector device manufactured according to the invention,
Fig. 2 is a sectional view along line II-II of Fig. 1,
Fig. 3 is a top view of a second embodiment of a flow detector device manufactured according to the invention,
Fig. 4 is a sectional view along line IV-IV of Fig. 3,
Fig. 5 is a sectional view of a third embodiment of a flow detector device analogous to the view of Fig. 4,
Fig. 6 is a sectional view of the embodiment of a humidity detector device analogous to the view of Fig. 4,
Fig. 7 is a top view of another embodiment of a flow detector device manufactured according to the invention.

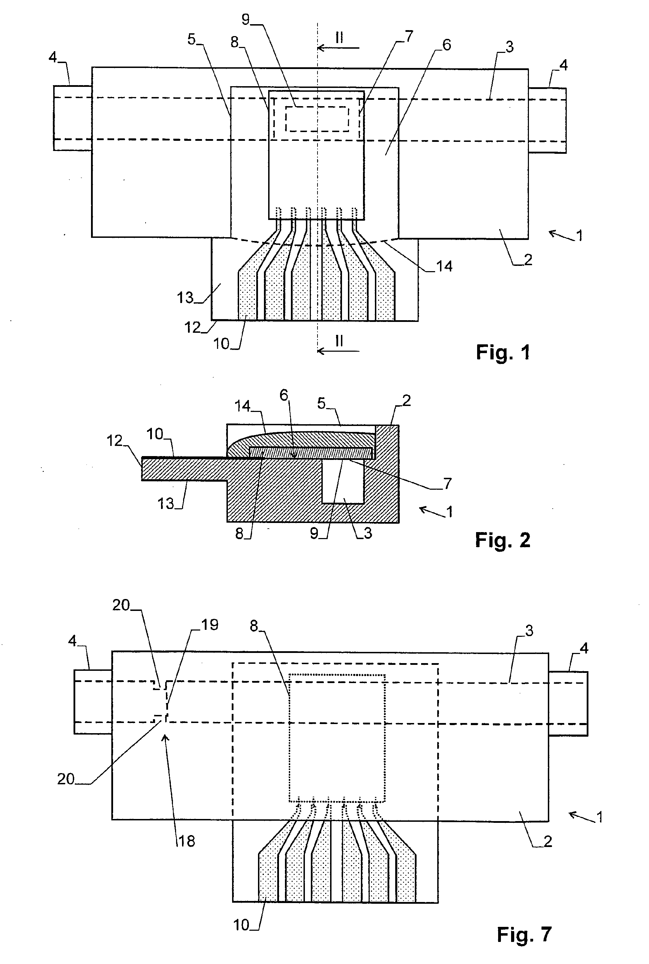

A first embodiment of a flow detector device that can be manufactured according to the present invention is shown in Figs. 1 and 2.

The device comprises a housing made of a molded plastic material. In the present embodiment, housing 1 is formed by a single housing body 2, which encloses a flow channel 3 (shown in dashed lines in Fig. 1) to receive a fluid to be measured. Flow channel 3 ends in lateral sockets 4, which are formed as integral parts of housing body 2 and can e.g. be used to connect the device to an external fluid system.

A recess 5 with a flat bottom surface 6 is formed on a top side of housing body 2. The bottom surface 6 of recess 5 is close to a side wall of channel 3, and an opening 7 is provided between recess 5 and channel 3.

Opening 7 is covered by a chip 8. Chip 8 is e.g. an integrated semiconductor chip and has an integrated flow sensor 9. It can e.g. be designed as disclosed in US 2004/0099057 and comprise a heating element and two temperature sensors. Circuitry is arranged on chip 8 or on a remote device that allows to measure the temperature difference between the two sensors.

Chip 8 is positioned in such a manner that its flow sensor 9 is located at opening 7 and is therefore able to measure the flow of the fluid in channel 3.

To connect chip 8 to an external device, a plurality of electric circuit paths 10 are arranged directly on the surface of housing body 2, e.g. on the bottom surface 6 of recess 5. They extend from the location of chip 8 to the edge 12 of a tongue 13. Tongue 13 protrudes from the device and is formed as an integral part of housing body 2. It forms e.g. the male part of a plug connector to mate with the corresponding female plug part of the external system.

The device shown in Figs. 1 and 2 is manufactured as follows:

In a first step, housing body 2 is formed by molding a hardening material, advantageously using well known injection molding or transfer molding techniques. This allows, in a single step, to form the housing, channel 3, sockets 4 and tongue 13.

Once housing body 2 is complete, the circuit paths 10 are arranged thereon using MID (Molded Interconnect Devices) techniques. Two-component MID techniques or laser structuring techniques can be used. Suitable methods are e.g. disclosed in US 6 219 253.

In a next step, the contact pads of chip 8 are electrically connected to the circuit paths 10 advantageously using flip-chip technology. In a preferred embodiment, one of the following gluing techniques is used:
1) An isotropically conductive adhesive is used to connect the contact pads of the chip to the circuit paths 10. Such a technique, which can optionally be combined with the application of a non-conductive adhesive (NCA), is described in US 6 555 414.
2) An anisotropically conductive adhesive (ACA) is used that, upon shrinkage, becomes conductive in areas of high compression. A suitable technique is described in US 6 238 597.
3) The chip is glued by means of a non-conductive adhesive (NCA) to surface 5. Suitable techniques are disclosed in US 6 930 399.

All these gluing techniques have the advantage of using low temperatures, which makes them especially suited for being applied for connecting chip 8 to the plastic housing body 2.

The application of flip-chip mounting technology simplifies the design of the device because the face of the chip carrying the integrated circuitry, such as the contact pads and the flow sensor, is inherently facing the housing body and therefore window 9. It must be noted, though, that wire bonding techniques, as to be described below, can be used as well.

Once that chip 8 is connected to the circuit paths 10, it can optionally be covered by a drop of a hardening material 14 for improved protection and mechanical stability. In Fig. 1, this material 14 is shown transparently and by a dashed line.

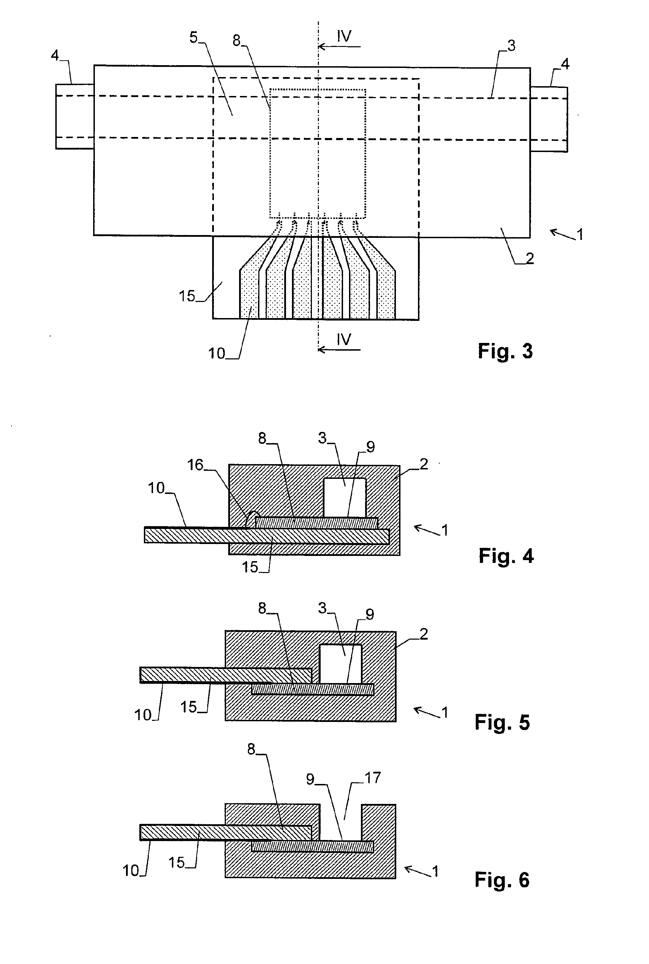

A second, similar flow detector device using a slightly different manufacturing technique is shown in Fig. 3. It again comprises a housing body 2, which encloses a flow channel 3 (shown in dashed lines in Fig. 3) to receive a fluid to be measured. Flow channel 3 ends in lateral sockets 4, which are formed as integral parts of housing body 2 and can e.g. be used to connected the device to an external fluid system.

In this embodiment, chip 8 is mounted to a substrate 15, and both of these parts are at least partially cast into housing body 2, wherein the integrated flow sensor of chip 8 is arranged to be in contact with channel 3. The circuit paths 10 are arranged on substrate 15, which is electrically insulating.

This embodiment of the device is manufactured as follows:

In a first step, chip 3 is mounted to substrate 15, primarily by electrically connecting it to the circuit paths 10. In the embodiment of Figs. 3 and 4, the connection is provided by wire bonds 16 using conventional wire bonding techniques. In addition to the electrical connection, chip 3 may be mechanically connected to substrate 15, e.g. by using conventional glue.

In a next step, housing body 2 is cast around at least part of chip 8 and part of substrate 15 by injection molding or transfer molding. The wire bonds 16 are advantageously embedded in housing body 2 for improved mechanical protection. Flow channel 3 is formed in this molding process, and housing body 2 again surrounds flow channel 3 (with the exception of the location of chip 3). Chip 3 is positioned such that its flow sensor 9 is adjacent to flow channel 3 and therefore is able to measure the fluid's flow.

Part of substrate 15, which is advantageously rigid, extends out of housing body 2 and forms a functional equivalent of tongue 13 of the embodiment of Fig. 1, i.e. it forms part of the male part of a plug connector.

A second embodiment of a device using a substantially the same manufacturing method as the device of Figs. 3 and 4 is shown in Fig. 5. The top view of the device of Fig. 5 looks similar to the one shown in Fig. 3 and is therefore not included.

In this embodiment, chip 8 is connected to substrate 15 using flip-chip-technology instead of wire bonding. Conventional flip-chip soldering techniques as well as one of the adhesive techniques mentioned above can be used, depending on the temperature stability of substrate 15. Since the flip-chip connection requires substrate 15 to contact chip 8 from above, substrate 15 is arranged at a higher location than in the embodiment of Fig. 4.

The device of Fig. 5 is again manufactured by first electrically connecting substrate 15 and chip 8, whereupon both these parts are embedded in the material of housing body 2 during the molding process of the latter.

The embodiment of the device of Fig. 6 is a substance detector, i.e. a detector that measures or detects the presence and/or concentration of one or more given substances. A typical example of such a detector is a humidity detector.

The device of Fig. 6 differs from the one of Fig. 15 in that flow channel 3 has been replaced by an opening 17, which extends between the substance sensor 9 integrated on chip 3 and the outside of housing body 2.

The device of Fig. 6 can be manufactured substantially in the same manner as the devices of Figs. 3 - 5.

Yet a further embodiment of a flow detector device is shown in Fig. 7. This embodiment differs from the one of Fig. 3 in that a valve 18 has been arranged in flow channel 3. Valve 18 is formed by a membrane 19 resting against a frame 20 and attached to one side thereof. It is an integral part of housing body 3 and can be manufactured by molding. It can be a passive valve or, in connection with a suitable actuator (not shown), an active valve. It can also be part of a pump, again in connection with a suitable actuator, such as a piezoelectric device.

Fig. 7 illustrates that housing body 2 can be structured in the molding process to fulfill additional functions depending on a specific application's needs. In particular, it can be cast to form valves or pumps or parts thereof.

In the embodiments above, it has been mentioned that chip 8 is a semiconductor chip. Depending on the nature of the components integrated thereon, it may also be another type of chip, such as a glass or ceramics chip.

## Claims

1. A method for manufacturing a flow detector device comprising the steps of
manufacturing a housing body (2) forming at least part of a flow channel (3) for a fluid to be measured, wherein electric circuit paths (10) are arranged on said housing body (2), and
mounting a chip (8) comprising an integrated flow sensor (9) to said housing body (2) and connecting said chip (8) to said circuit paths (10).

2. The method of claim 1 comprising the steps of
manufacturing said housing body (2) and subsequently
arranging said electric circuit paths (10) on a surface of said housing body (2).

3. The method of any of the preceding claims wherein said housing body (2) surrounds said flow channel (3).

4. The method of any of the preceding claims wherein said housing body (2) comprises an opening (7) that opens to said flow channel (3) and wherein said chip (8) is mounted with said flow sensor (9) at said opening (7), and in particular wherein said chip (8) is mounted to cover said opening (7).

5. The method of any of the preceding claims wherein said housing body (2) is formed by molding, in particular by injection molding or transfer molding.

6. The method of any of the preceding claims further comprising the step of forming a plug connector (12, 13) in said housing body (2) wherein said circuit paths (10) extend from said chip (8) to said plug connector (12, 13).

7. The method of any of the preceding claims wherein said chip (8) is flip-chip-mounted on said housing body (2) with a,face of said chip (8) carrying said flow sensor (9) facing towards said housing body (2).

8. The method of any of the preceding claims comprising the steps of forming a recess (5) in said housing body (2) and of placing said chip (8) in said recess (5).

9. A method for manufacturing a detector device comprising the steps of
electrically connecting a chip (8) comprising an integrated sensor to circuit paths (10) on an electrically insulating substrate (15) and
manufacturing a housing body (2) by molding a hardening material, wherein at least part of said chip (8) and said substrate (15) is cast in said hardening material during said molding.

10. The method of claim 9 wherein said chip (8) is attached to said substrate (15) prior to manufacturing said housing body (2).

11. The method of any of the claims 9 or 10 wherein said chip (8) is electrically connected to said substrate (15) by means of bond wires (16) and wherein said bond wires (16) are subsequently embedded in said hardening material.

12. The method of any of the claims 9 to 11 wherein part of said substrate (15) extends out of said housing body (2).

13. The method of any of the claims 9 to 12 further comprising the step of forming a plug connector comprising at least part of said substrate (15).

14. The method of any of the claims 9 to 13 wherein said detector device is a flow detector device with a flow channel (3) for a fluid to be measured and wherein said housing body (2) surrounds said flow channel (3), and wherein said chip (8) is located adjacent to said flow channel (3).

15. The method of any of the claims 9 to 13 wherein said detector device is a substance detector for detecting a substance, wherein an opening (17) is formed in said housing body (2) extending between said chip (8) and an outside of said housing body (2).

16. The method of any of the claims 9 to 15 wherein said substrate (15) is rigid.

17. The method of any of the preceding claims wherein said chip (8) is a semiconductor chip.

18. The method of any of the preceding claims wherein said detector device is a flow detector device with a flow channel (3) for a fluid to be measured, said method further comprising the step of molding said housing body (2) to form at least part of a valve and/or pump, and in particular wherein said housing body (2) is molded to form a membrane (19) for a valve and/or pump.
